(19) Europäisches Patentamt / European Patent Office / Office européen des brevets

(11) **EP 4 016 362 A1**

(12) **EUROPEAN PATENT APPLICATION**

(43) Date of publication:
**22.06.2022 Bulletin 2022/25**

(51) International Patent Classification (IPC):
**G06F 30/15** (2020.01)    G06F 111/10 (2020.01)

(21) Application number: **21215202.9**

(52) Cooperative Patent Classification (CPC):
**G06F 30/15;** G06F 2111/10

(22) Date of filing: **16.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 US 202017126147**

(71) Applicant: **PRATT & WHITNEY CANADA CORP.
Longueuil, Québec J4G 1A1 (CA)**

(72) Inventors:
 • **SMITH, Fabrizio
 (01BE5) Longueuil, J4G 1A1 (CA)**
 • **DE ANTONI, Andrea
 (01BE5) Longueuil, J4G 1A1 (CA)**
 • **BANERJEE, Avisekh
 (01BE5) Longueuil, J4G 1A1 (CA)**
 • **RUCCO, Matteo
 (01BE5) Longueuil, J4G 1A1 (CA)**
 • **SURANA, Amit
 (01BE5) Longueuil, J4G 1A1 (CA)**
 • **ZHU, Hongyu
 (01BE5) Longueuil, J4G 1A1 (CA)**

(74) Representative: **Dehns
St. Bride's House
10 Salisbury Square
London EC4Y 8JD (GB)**

(54) **METHODS AND SYSTEMS FOR DEFINING MISSION PROFILES FOR A NEW ENGINE**

(57)    Systems and methods (24, 30) for defining mission profiles for a new engine (10) are described. The method (30) comprises: selecting (32) deployed engines from a set of existing engines based on components of the new engine (10) using a first similarity metric; collecting (34) field data (402A, 402B,...402N) associated with the deployed engines, the field data (402A, 402B,...402N) comprising usage and operating conditions for the deployed engines; creating (36) representative mission profiles from the field data (402A, 402B,...402N) using a second similarity metric; and defining (38) the mission profiles for the new engine (10) using the representative mission profiles.

FIG. 3A

EP 4 016 362 A1

**Description**

TECHNICAL FIELD

The application relates generally to engine design and, more particularly, to defining mission profiles for new engines.

BACKGROUND OF THE ART

When an aircraft engine is designed, there are several steps to follow, one of which is defining a collection of mission profiles, which include key performance indicators expected in the operation of a pre-defined set of mission types for the engine. This is referred to as Mission Design, and supports both engine production and engine usage directives. Mission Design takes place at the beginning of engine development, based on customer requirements and the knowledge of domain experts.

While current techniques for Mission Design are suitable for their purposes, improvements are desired.

SUMMARY

According to an aspect of the present invention, there is provided a method for defining mission profiles for a new engine. The method comprises selecting deployed engines from a set of existing engines based on components of the new engine using a first similarity metric; collecting field data associated with the deployed engines, the field data comprising usage and operating conditions for the deployed engines creating representative mission profiles from the field data using a second similarity metric; and defining the mission profiles for the new engine using the representative mission profiles.

According to another aspect of the present invention, there is provided a system for defining mission profiles for a new engine. The system comprises a processor and a non-transitory computer readable medium having stored thereon program instructions. The program instructions are executable by the processor for selecting deployed engines from a set of existing engines based on components of the new engine using a first similarity metric; collecting field data associated with the deployed engines, the field data comprising usage and operating conditions for the deployed engines creating representative mission profiles from the field data using a second similarity metric; and defining the mission profiles for the new engine using the representative mission profiles.

Features of embodiments are recited in the dependent claims.

Features of the systems, devices, and methods described herein may be used in various combinations, in accordance with the embodiments described herein. In particular, any of the above features may be used together, in any combination

DESCRIPTION OF THE DRAWINGS

Reference is now made to the accompanying figures in which:

Fig. 1 is a schematic cross sectional view of a gas turbine engine;

Fig. 2 is a schematic diagram of a mission profile design system coupled to a digital thread platform;

Figs. 3A-3C are flowcharts of example methods;

Fig. 4A shows an example of selecting existing engines;

Fig. 4B shows example graphs of field data;

Fig. 4C shows an example of groupings of the field data of Fig. 4B; and

Fig. 5 is a block diagram of an example computing device.

DETAILED DESCRIPTION

There are described herein methods and systems for data-enhanced mission profile design for aircraft engines. A mission profile defines the combination of influences that the engine is subjected to in its specific application during its service life, and which have an effect on its reliability. This may involve both environmental factors, such as temperature, altitude or vibration, as well as performance parameters such as thrust and fuel consumption. As engines are typically used for more than one specific application, an engine is designed using a set of mission profiles that together represent the expected use of the engine.

A digital thread platform is leveraged for defining the mission profiles for a new engine. The expression "digital thread" is used herein to refer to a collection of digital data across the life cycle of existing engines, including design, testing, manufacturing, operation, maintenance, and end of life. The platform provides access to the digital footprint of engines that have been manufactured and deployed. As such, the accuracy of the design phase of a new engine is improved, by reducing uncertainty in design choices through the exploitation of real flight-data carrying actual usage information of similar products from the field. The data-enhanced mission profiles may also be used to better negotiate and design tailored after-market maintenance repair and overhaul (MRO) strategies based on operator-profiled usage.

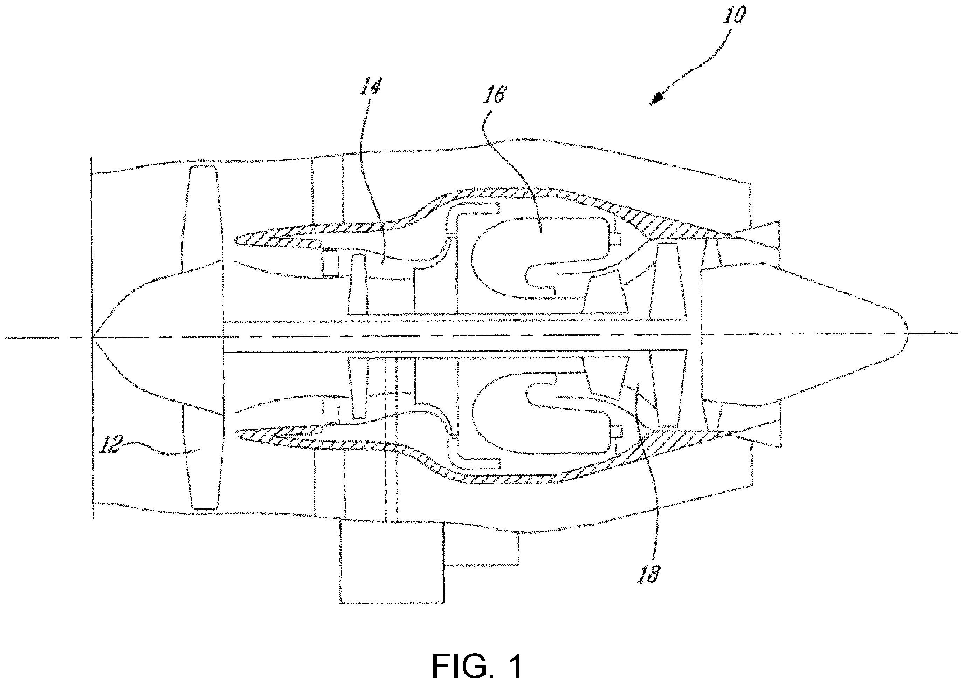

The methods and systems for data-enhanced mission profile design as described herein are applicable to gas turbine engines such as turbofan engines, turboshaft engines, and turboprop engines. Fig. 1 illustrates an example gas turbine engine 10 of a type provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. It will be understood that the engine 10 of Fig. 1 is merely one example of a type of engine for which the methods and systems for defining mission profiles may be used, as they may also be suitable for fuel-based engines, diesel engines, electric engines, hybrid electric engines, etc.

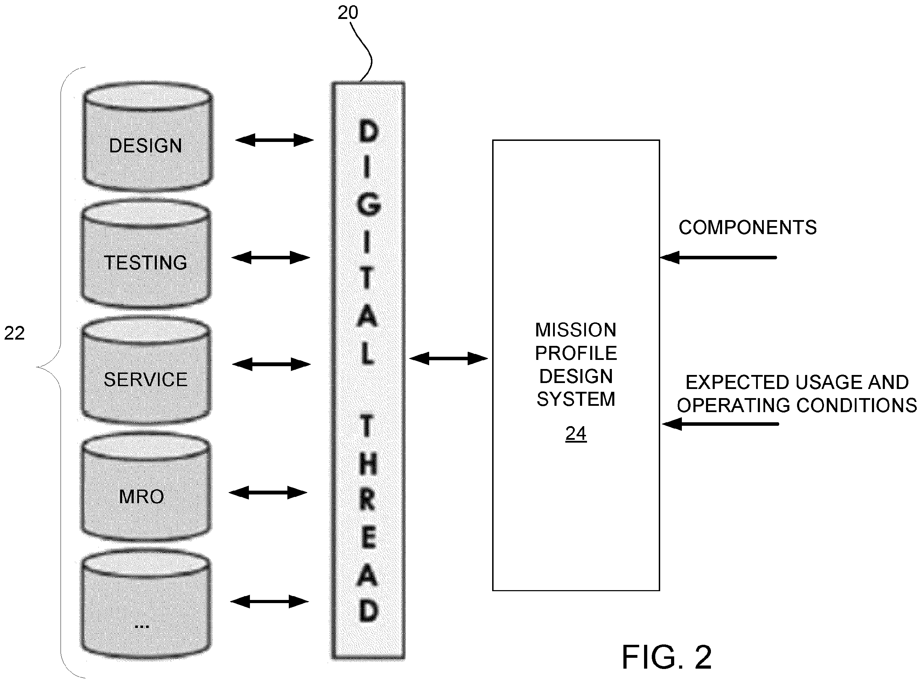

Referring to Fig. 2, a digital thread platform 20 provides access to one or more databases 22 holding digital data for deployed engines. Although the expression "database" is used herein, any type of repository for holding data or information that is organized for search and retrieval may be used. The databases 22 comprise digital data relating to one or more of the design, testing, service, MRO, and any other aspect of the life cycle of deployed engines. For example, the digital data may also relate to flights, operating conditions, usage, and analytical data for the deployed engines. The databases 22 are illustrated as separate entities but may be grouped in any manner or combination. In addition, the databases 22 may be located at various remote locations, accessible through the digital thread platform 20 via one or more network.

In some embodiments the digital thread platform 20 makes use of a Knowledge Graph (KG) to link the data found in the databases 22 and provide a framework for data integration, unification, analytics, and sharing. A semantic definition is captured into a computational ontology with respect to main engine features and properties. Access to the KG is provided via reasoning, including classification, entailment, link embedding, graph matching, and the like. Alternatively, other structures and/or tools may be used for data representation and knowledge management. For example, property graphs, labelled graphs, object-oriented models, NoSQL stores, associative or relational databases, and a combination thereof may be used.

A mission profile design system 24 is operatively connected to the digital thread platform 20 for access and retrieval of data from the databases 22. Information related to a new engine to be designed, such as components and expected usage and conditions, may be input into the system 24 for defining data-enhanced mission profiles for the new engine. The components may be conceptual and/or preliminary, physical and/or virtualized. The expected usage and operating conditions may be high level and based on certain assumptions.

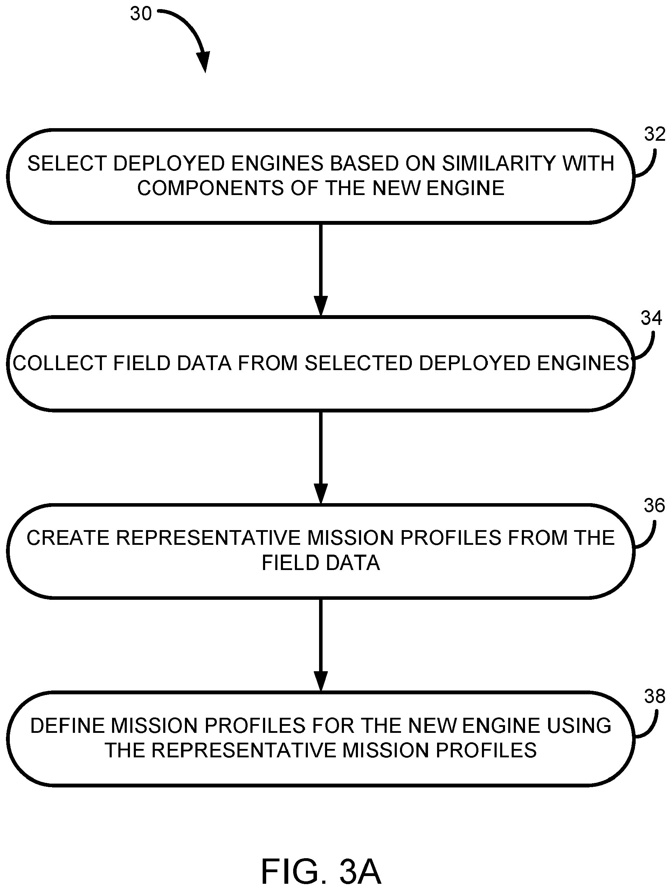

Figure 3A illustrates an example method 30 for defining mission profiles for a new engine, such as engine 10, as performed by the mission profile design system 24. At step 32, deployed engines are selected from a set of existing engines through the digital platform 20. The selection is based on components of the new engine. For example, a similarity measure or similarity function, referred to herein as a first similarity metric, is used to calculate the similarity between a given deployed engine and the new engine by comparing parameters of the given deployed engine and parameters of the new engine. The comparison may be based on engine type, product family, engine components, materials, manufacturing techniques, and any other parameter related to the design and/or manufacture of the new engine. In one example, the first similarity metric may be defined as:

$$d(E_1, E_2) = \sum_{i=1}^{N} w_i d_i(A_{1i}, A_{2i})$$

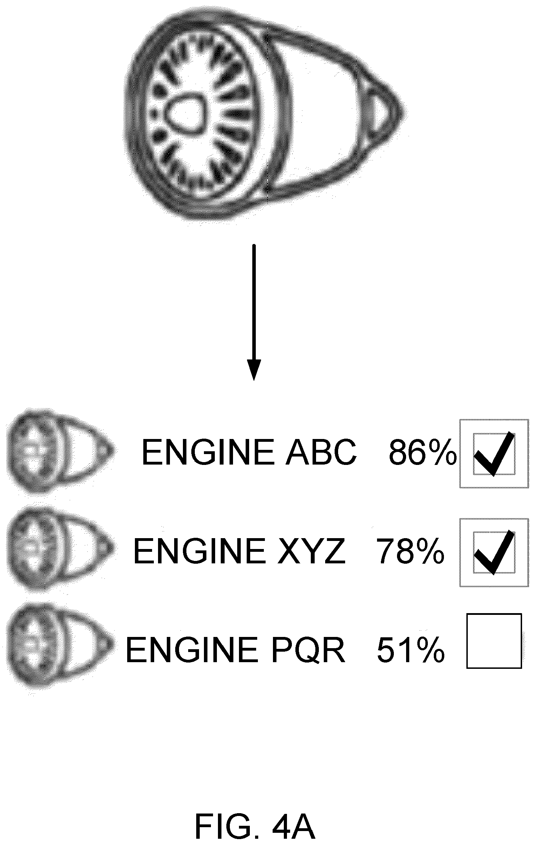

where $E_k = (A_{k1}, A_{k2}, ..., A_{kN}), k = 1,2$ are the engine parameters with categorical variable $A_{ki}$, $d_i(A_{1i}, A_{2i}) = \begin{cases} 1 \ if \ A_{1i} = A_{2i} \\ 0 \ if \ A_{1i} \neq A_{2i} \end{cases}$ is an indicator function, and $w_i$ is the weight corresponding to $d_i$ such that $\sum_{i=1}^{N} w_i = 1, 0 < w_i < 1$. Other appropriate definitions may also be used. The existing engines are ranked according to the score d and deployed engines that score higher than a given threshold are selected. An example is illustrated in Fig. 4A. In this example, the threshold is set to 75%. Engines ABC and XYZ scored above 75% and are thus selected. Engine PQR scored below 75% and is not selected. Other threshold values may be used, in accordance with practical implementations. If a given threshold does not result in a sufficient number of matches, it may be lowered to a different value. Testing and simulation may be performed to optimize the threshold as a function of certain factors, as will be readily understood by those skilled in the art.

Referring back to Fig. 3A, field data is collected from the selected engines at step 34. In other words, the field data associated with the existing engines that were found to meet a similarity requirement in step 32 is collected at step 34. The field data relates to usage and operating conditions of the deployed engines, such as speed, altitude, thrust, temperature, mission duration, and the like. Field data generally describes the way in which an engine is used, which may be represented by the combination of flight data profiles, mission types, and their statistical distribution. Flight data profiles are time-series of the key performance indicators measured from an engine while in flight; mission types are characteristics of the mission profiles describing the purpose and nature of the mission, typically followed consistently in the aerospace industry. At step 36, representative mission profiles are creating from the field data associated with the selected deployed engines. At step 38, the mission profiles for the new engine are defined from the representative mission profiles.

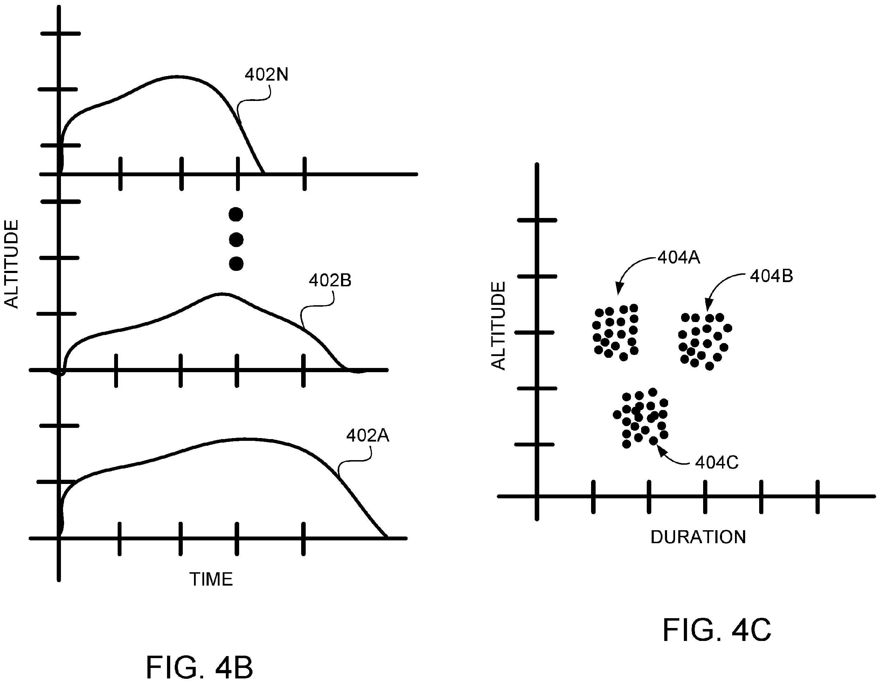

With reference to Fig. 4B, there is illustrated an example of field data associated with one deployed engine. A plurality of curves 402A, 402B, ... 402N represent the altitude flown by a given deployed engine in an aircraft with respect to time. Each curve 402A, 402B, ... 402N relates to a given mission flown, and has a given duration associated thereto. An engine having flown one hundred missions would have one hundred altitude curves. Each parameter of the field data, such as temperature, thrust, speed, and the like, may be represented by its own set of curves. In addition, each selected deployed engine has its own set of curves for each one of the parameters. Various machine learning techniques may be used to provide more meaningful information from the large volume of field data, such as breaking the data set into groups using similarity metrics. An example is illustrated in Fig. 4C, where clustering is used on the altitude curves 402A, 402B, ... 402N to generate groupings 404A, 404B, 404C. Any number of clustering techniques or algorithms may be used to create groupings 404A, 404B, 404C, such as k-means and k-medoids. The groupings 404A, 404B, 404C are then used to create representative mission profiles. In some embodiments, the groupings 404A, 404B, 404C are time series clusters, and the representative mission profiles correspond to the centroids of the time-series clusters. These representative mission profiles are used as the mission profiles for the new engine, and are considered "data-driven" as they are defined on the basis of actual field data from existing engines that are similar in terms of components and expected usage and operating conditions.

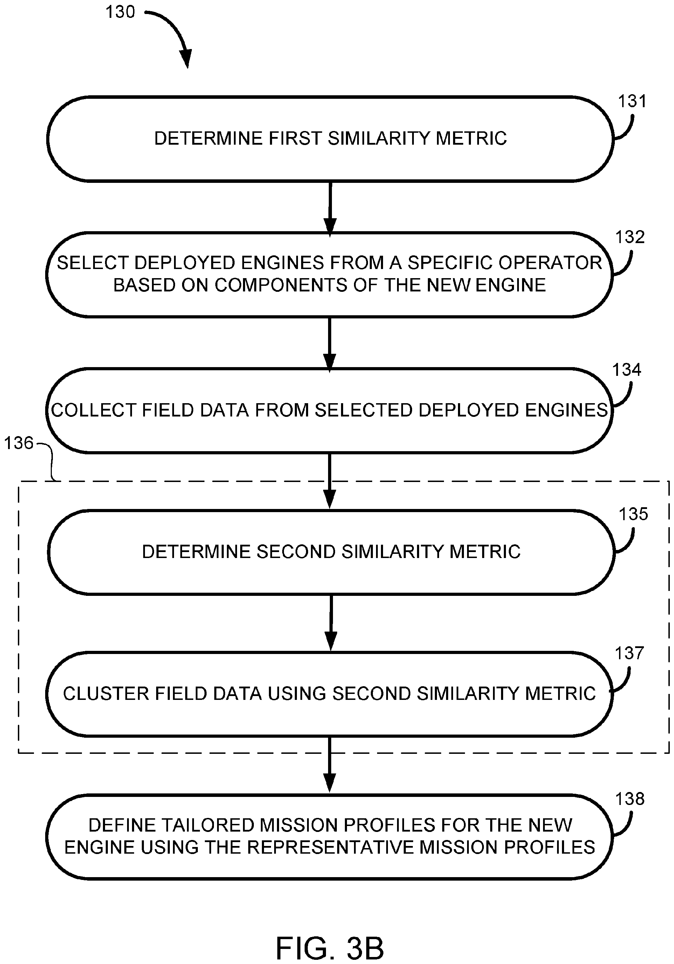

In some embodiments, the representative mission profiles are determined using a second similarity metric. The second similarity metric may be received by the mission profile design system 24 for use in step 36 of method 30 or computed as part of the method 30. An example embodiment is illustrated in method 130 of Fig. 3B, where a step 136 of creating representative mission profiles from the field data is performed in two steps. At step 135, a second similarity metric is computed by comparing the field data of the selected deployed engines, and more specifically the usage and operating conditions, to the expected usage and operating conditions of the new engine. The second similarity metric can be a similarity metric directly comparing time series, e.g. Dynamic Time Warping distance. It can also be a weighted Euclidean distance or other distance comparing the features extracted from the time series including but not limited to flight duration, cruise duration, maximum altitude, maximum speed, maximum thrust and take-off ambient temperature. The second similarity metric is then used at step 137 to cluster the field data into time-series clusters of the key performance indicators measured from an engine while in flight. These time-series clusters are the representative mission profiles that may be used to define the mission profiles of the new engine.

Similarly, the first similarity metric may be received by the mission profile design system 24 for use in step 32 method 30 or computed as part of the method. An example embodiment is illustrated in Fig. 3B, where the first similarity metric is determined at step 131 at the outset of the method 130.

In some embodiments, additional filters are applied when selecting deployed engines based on similarities with the new engine. For example, the selection may be additionally tailored to a specific aircraft operator, a geographical region in which the aircraft will be flying, and the like. Such filtering serves to further refine the initial selection to provide "closer" engine matches. However, the trade-off may be less field data to work with in the subsequent steps of the method 30. In the example method 130, selection is performed at step 132 based on component and aircraft operator, and field data is collected from the selected deployed engines at step 134. A set of tailored mission profiles are defined for the new engine at step 138.

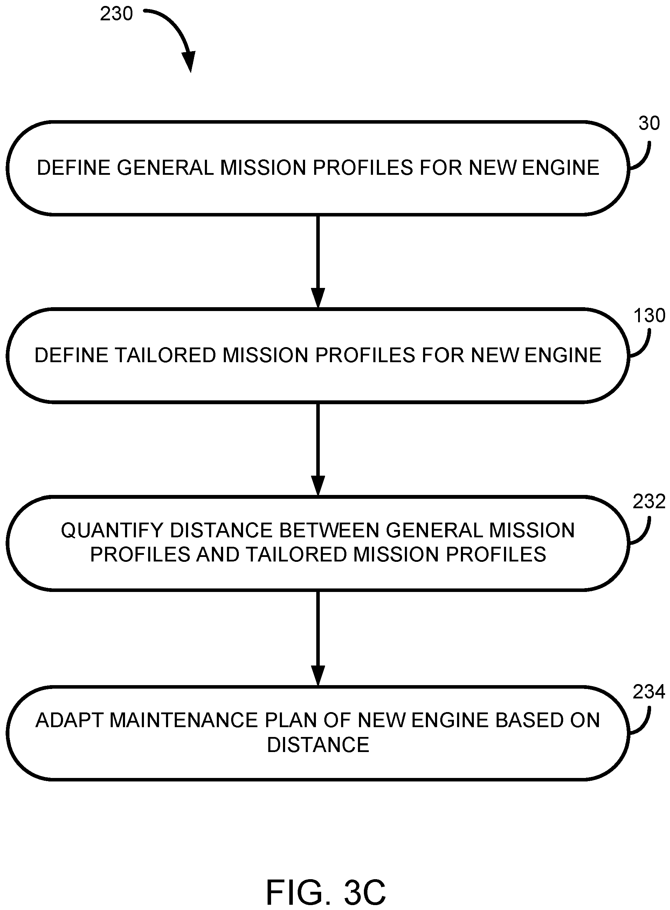

In some embodiments, the method 130 of defining tailored mission profiles is repeated post deployment of the new engine, once the newly introduced engine matures by building an adequate usage history. In this instance, step 132 of selecting deployed engines may be performed on the basis of actual components of the new engine instead of on a conceptual and preliminary design of the new engine. Similarly, step 135 of determining the second similarity metric may be performed on the basis of actual usage and operating conditions of the new engine instead of assumptions on expected usage. With reference to Fig. 3C, there is shown an example method 230, where general mission profiles are defined for the new engine at step 30, and tailored mission profiles are defined at step 130. At step 232, a distance between the general mission profiles and tailored mission profiles may be quantified, for example using the second similarity metric. This may be used, for example to identify gaps in the general mission profiles originally defined. At step 234, a maintenance plan of the new engine is adapted based on the distance between the general mission profiles and tailored mission profiles. Method 230 may be useful, for example, for negotiating new MRO contracts tailored for the new operator.

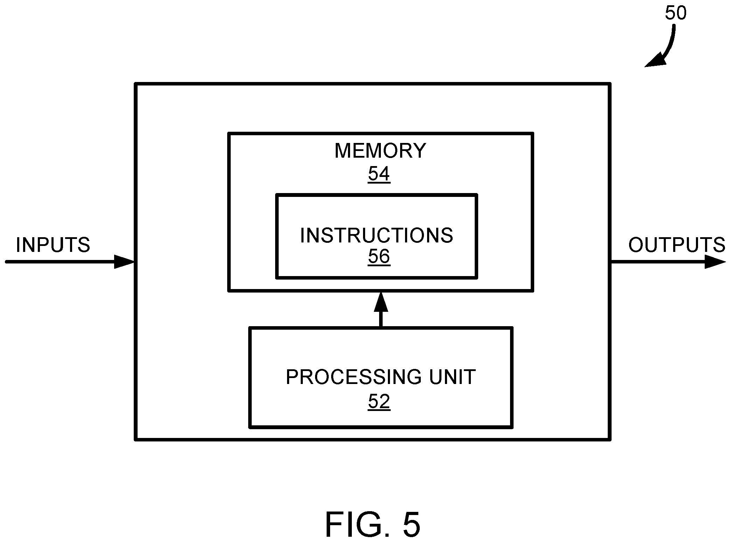

With reference to Fig. 5, an example of a computing device 50 is illustrated. The mission profile design system 24 may be implemented with one or more computing devices 50. For simplicity only one computing device 50 is shown. The computing devices 50 may be the same or different types of devices. The computing device 50 comprises a processing unit 52 and a memory 54 which has stored therein computer-executable instructions 56. The processing unit 52 may comprise any suitable devices configured to implement the methods 30, 130, 230 such that instructions 56, when executed by the computing device 50 or other programmable apparatus, may cause the functions/acts/steps performed as part of the methods 30, 130, 230 as described herein to be executed. The processing unit 52 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 54 may comprise any suitable known or other machine-readable storage medium. The memory 54 may comprise non-transitory computer readable storage medium, for example, but not limited to, an electronic, magnetic, optical, electromagnetic, infrared, or semiconductor system, apparatus, or device, or any suitable combination of the foregoing. The memory 54 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 54 may comprise any storage means (e.g., devices) suitable for retrievably storing machine-readable instructions 56 executable by processing unit 52.

The methods and systems for defining mission profiles for a new engine described herein may be implemented in a high level procedural or object oriented programming or scripting language, or a combination thereof, to communicate with or assist in the operation of a computer system, for example the computing device 50. Alternatively, the methods and systems for defining mission profiles for a new engine may be implemented in assembly or machine language. The language may be a compiled or interpreted language. Program code for implementing the methods and systems for defining mission profiles for a new engine may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for defining mission profiles for a new engine may also be considered to be implemented by way of a non-transitory computer-readable storage medium having a computer program stored thereon. The computer program may comprise computer-readable instructions which cause a computer, or more specifically the processing unit 52 of the computing device 50, to operate in a specific and predefined manner to perform the functions described herein, for example those described in the methods 30, 130, 230.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, the mission profiles may be used for various aspects of prognostics and health management. Yet further modifications could be implemented by a person of ordinary skill in the art in view of the present disclosure, which modifications would be within the scope of the present technology.

**Claims**

1.  A method (30) for defining mission profiles for a new engine (10), the method (30) comprising:

    selecting (32) deployed engines from a set of existing engines based on components of the new engine (10) using a first similarity metric;
    collecting (34) field data (402A, 402B,...402N) associated with the deployed engines, the field data (402A, 402B,...402N) comprising usage and operating conditions for the deployed engines;
    creating (36) representative mission profiles from the field data (402A, 402B,...402N) using a second similarity metric; and
    defining (38) the mission profiles for the new engine (10) using the representative mission profiles.

2.  The method (30) of claim 1, wherein selecting (32) deployed engines from a set of existing engines comprises selecting deployed engines associated with a specific operator.

3.  The method (30) of claim 1 or 2, wherein the set of existing engines are located within a database (22) and selecting (32) deployed engines comprises selecting from the database (22) through a digital platform (20).

4.  The method (30) of any preceding claim, wherein defining (38) the mission profiles for the new engine (10) comprises defining general mission profiles, and further comprising:

    defining (130) tailored mission profiles for the new engine (10); and
    quantifying (232) a distance between the general mission profiles and the tailored mission profiles using the second similarity metric.

5.  The method (30) of claim 4, further comprising adapting (234) a maintenance plan of the new engine (10) based on the distance between the general design mission and the tailored design mission.

6.  The method (30) of any preceding claim, wherein selecting (32) the deployed engines from the set of existing engines comprises selecting based on the components and geographical region.

7.  The method (30) of any preceding claim, further comprising determining the first similarity metric for selecting the deployed engines from the set of existing engines.

8.  The method (30) of any preceding claim, further comprising determining the second similarity metric by comparing expected usage and operating conditions of the new engine (10) with the usage and operating conditions for the deployed engines.

9.  The method (30) of any preceding claim, wherein selecting (32) the deployed engines from the set of existing engines comprises applying query and ranking operations to a Knowledge Graph.

10. The method (30) of any preceding claim, wherein creating (36) the representative mission profiles from the field data (402A, 402B,...402N) comprises using query and clustering operations on the field data (402A, 402B,...402N).

11. The method (30) of claim 10, wherein defining (38) the mission profiles for the new engine comprises computing centroids of time-series clusters (404A, 404B, 404C) based on key performance indicators.

12. A system (24) for defining mission profiles for a new engine (10), the system (24) comprising:

    a processor (52); and
    a non-transitory computer readable medium (54) having stored thereon program instructions (56) executable by the processor (52) for carrying out the method (30) of any preceding claim.

FIG. 1

FIG. 2

30

SELECT DEPLOYED ENGINES BASED ON SIMILARITY WITH
COMPONENTS OF THE NEW ENGINE
32

COLLECT FIELD DATA FROM SELECTED DEPLOYED ENGINES
34

CREATE REPRESENTATIVE MISSION PROFILES FROM THE
FIELD DATA
36

DEFINE MISSION PROFILES FOR THE NEW ENGINE USING
THE REPRESENTATIVE MISSION PROFILES
38

FIG. 3A

130

DETERMINE FIRST SIMILARITY METRIC — 131

SELECT DEPLOYED ENGINES FROM A SPECIFIC OPERATOR
BASED ON COMPONENTS OF THE NEW ENGINE — 132

COLLECT FIELD DATA FROM SELECTED DEPLOYED ENGINES — 134

136

DETERMINE SECOND SIMILARITY METRIC — 135

CLUSTER FIELD DATA USING SECOND SIMILARITY METRIC — 137

DEFINE TAILORED MISSION PROFILES FOR THE NEW
ENGINE USING THE REPRESENTATIVE MISSION PROFILES — 138

FIG. 3B

230

DEFINE GENERAL MISSION PROFILES FOR NEW ENGINE — 30

DEFINE TAILORED MISSION PROFILES FOR NEW ENGINE — 130

QUANTIFY DISTANCE BETWEEN GENERAL MISSION PROFILES AND TAILORED MISSION PROFILES — 232

ADAPT MAINTENANCE PLAN OF NEW ENGINE BASED ON DISTANCE — 234

FIG. 3C

ENGINE ABC   86% ☑

ENGINE XYZ   78% ☑

ENGINE PQR   51% ☐

FIG. 4A

FIG. 4C

404B

404A

404C

DURATION

ALTITUDE

FIG. 4B

402N

402B

402A

TIME

ALTITUDE

50

INPUTS →

MEMORY
54

INSTRUCTIONS
56

OUTPUTS →

PROCESSING UNIT
52

FIG. 5

Europäisches
Patentamt

European
Patent Office

Office européen
des brevets

## EUROPEAN SEARCH REPORT

**Application Number**

EP 21 21 5202

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rios Alejandro ET AL: "Identification of the Actual Mission Profiles and Their Impact on the Integrated Aircraft and Airline Network Optimization", , 1 November 2020 (2020-11-01), XP055917405, Retrieved from the Internet: URL:https://www.researchgate.net/publication/346030583_Identification_of_the_Actual_Mission_Profiles_and_Their_Impact_on_the_Integrated_Aircraft_and_Airline_Network_Optimization/link/60ba9074458515218f8f9133/download [retrieved on 2022-05-03] * abstract * * sections III.C-F, IV.A-F * * figures 3-5, 8-11 * * tables 1-3 * * the whole document * | 1-12 | INV. G06F30/15<br><br>ADD. G06F111/10 |
| X | Kim Dajung ET AL: "Data-driven Operation-based Aircraft Design Optimization", , 25 June 2020 (2020-06-25), pages 2020-3156, XP055917735, DOI: 10.2514/6.2020-3156ï¿¿ Retrieved from the Internet: URL:https://hal-enac.archives-ouvertes.fr/hal-02868096/document [retrieved on 2022-05-03] * abstract * * sections IIIA-D, IV.A-B, V * * figures 1, 4, 5, 6, 9 * * the whole document * | 1-12 | **TECHNICAL FIELDS SEARCHED (IPC)**<br><br>G06F |

-/--

The present search report has been drawn up for all claims

| Place of search | Date of completion of the search | Examiner |
|---|---|---|
| Munich | 6 May 2022 | Joris, Pierre |

EPO FORM 1503 03.82 (P04C01)

## EUROPEAN SEARCH REPORT

**Application Number**

EP 21 21 5202

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI LISHUAI ET AL: "Analysis of Flight Data Using Clustering Techniques for Detecting Abnormal Operations", JOURNAL OF AEROSPACE INFORMATION SYSTEMS, vol. 12, no. 9, 1 September 2015 (2015-09-01), pages 587-598, XP055917840, DOI: 10.2514/1.I010329 Retrieved from the Internet: URL:https://www.researchgate.net/publicati on/282891656_Analysis_of_Flight_Data_Using _Clustering_Techniques_for_Detecting_Abnor mal_Operations/link/5c9180a2a6fdccd4602bf0 69/download> [retrieved on 2022-05-03] * abstract * * figures 1, 2 * * sections I, II.A-B, III.B.4 * * the whole document * ----- | 1-12 | |
| A | Pelt Maurice ET AL: "DATA MINING IN MRO", , 1 February 2019 (2019-02-01), XP055917836, Retrieved from the Internet: URL:https://library.oapen.org/bitstream/id /083fcbfb-ac19-4e2e-9ca4-a632c5f23d02/data -mining-in-mro---publication-auas-2019.pdf [retrieved on 2022-05-03] * sections 3, 5, 6 * * the whole document * ----- | 1-12 | **TECHNICAL FIELDS SEARCHED (IPC)** |

The present search report has been drawn up for all claims

| Place of search | Date of completion of the search | Examiner |
|---|---|---|
| Munich | 6 May 2022 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)